# EUROPÄISCHE PATENTANMELDUNG

(11) **EP 0 903 085 A2**
(43) Veröffentlichungstag der Anmeldung: **24.03.1999**
(21) Anmeldenummer: 98117928.6
(22) Anmeldetag: 22.09.1998
(51) Int. Cl.: A41D 13/04, A41D 13/12

(54) **Zum einmaligen Gebrauch bestimmte Schürze, insbesondere für medizinische Zwecke**

(30) Priorität: 22.09.1997 DE 29716973 U
(71) Anmelder: Udo Heisig GmbH, 85640 Putzbrunn (DE)
(72) Erfinder: Heisig, Udo, D-85521 Hohenbrunn-Riemerling (DE)
(74) Vertreter: Feldkamp, Rainer, Dipl.-Ing.

(57) **Zusammenfassung**

Bei einer zum einmaligen Gebrauch bestimmten Schürze, insbesondere für medizinische Zwecke, die aus einer Kunststofffolienbahn hergestellt ist, ist am unteren Bereich der Schürze (1) einstückig eine Ablauftasche (11) ausgebildet, die das Auffangen von von der Schürze (1) abtropfenden Flüssigkeiten ermöglicht.

## Beschreibung

Die Erfindung bezieht sich auf eine für den einmaligen Gebrauch bestimmte Schürze, insbesondere für medizinische Anwendungen, der im Oberbegriff des Anspruchs 1 genannten Art.

Derartige Schürzen werden aus dünnem Folienmaterial hergestellt, wobei es bereits bekannt ist, derartige Schürzen aus einem Folienbahnabschnitt herzustellen, die der in Laufrichtung der Folienbahn hälftig auf sich selbst umgefaltet ist, wobei an der Faltkante eine später die Öffnung zum Durchstecken des Kopfes bildende Aussparung ausgestanzt wird, während auf der gegenüberliegenden Kante, an der die freien Enden des auf sich selbst umgefalteten Folienmaterials liegen, Befestigungsbänder ausgestanzt werden, die um den Rumpf der Person festgebunden werden können. Derartige Schürzen lassen sich mit sehr geringem Kostenaufwand herstellen. In vielen Fällen sollen diese Schürzen einen Schutz der sie tragenden Person gegen verspritzte Flüssigkeiten bieten, wobei jedoch die Gefahr besteht, daß diese Flüssigkeiten auf die Schürze gelangen und von dieser abtropfen, so daß die Schutzwirkung unvollständig ist.

Der Erfindung liegt die Aufgabe zugrunde, eine Schürze der eingangs genannten Art zu schaffen, die selbst einen Schutz gegen erhebliche Mengen an verspritzter Flüssigkeit bietet.

Diese Aufgabe wird durch die im kennzeichnenden Teil des Patentanspruchs 1 angegebenen Merkmale gelöst.

Vorteilhafte Ausgestaltungen und Weiterbildungen der Erfindung ergeben sich aus den Unteransprüchen.

Durch die erfindungsgemäße Ausgestaltung der Schürze mit einer am unteren Rand angeordneten Ablauftasche werden selbst große Flüssigkeitsmengen, die auf der Schürze auftreffen, am unteren Rand der Schürze sicher aufgefangen und können ggf. über einen Ablaufschlauch entsorgt werden.

Da die Ablauftasche einstückig aus dem Folienmaterial der Schürze selbst hergestellt ist, ist der zusätzliche Aufwand relativ gering, und die Schürze ergibt einen sicheren Schutz einer Person gegen Flüssigkeiten.

Die Erfindung wird im folgenden anhand von in der Zeichnung dargestellten Ausführungsbeispielen noch näher erläutert.

In der Zeichnung zeigen:
- Fig. 1: eine erste Ausführungsform der Schürze mit integrierter Ablauftasche vor dem Auffalten des auf sich selbst umgelegten Folienmaterials,
- Fig. 2: die Schürze nach Fig. 1 nach dem Auffalten des Folienmaterials,
- Fig. 3: eine perspektivische Ansicht der Schürze nach den Fig. 1 und 2 nach dem Auffalten, wobei an der Auslaßöffnung ein Siebkörper angebracht ist
- Fig. 4: eine Ansicht einer weiteren Ausführungsform der Schürze vor dem Verschweißen der Seitenkanten der Ablauftasche,
- Fig. 5: die Schürze nach Fig. 4 nach dem Verschweißen der Seitenkanten der Ablauftasche,
- Fig. 6: eine schematische Ansicht eines Siebkörpers mit Schlauchstutzen zur Anbringung an der Ablauföffnung der Schürze nach den Fig. 1 - 5,
- Fig. 7: eine auseinandegezogene Ansicht des Siebkörpers nach Fig. 6.

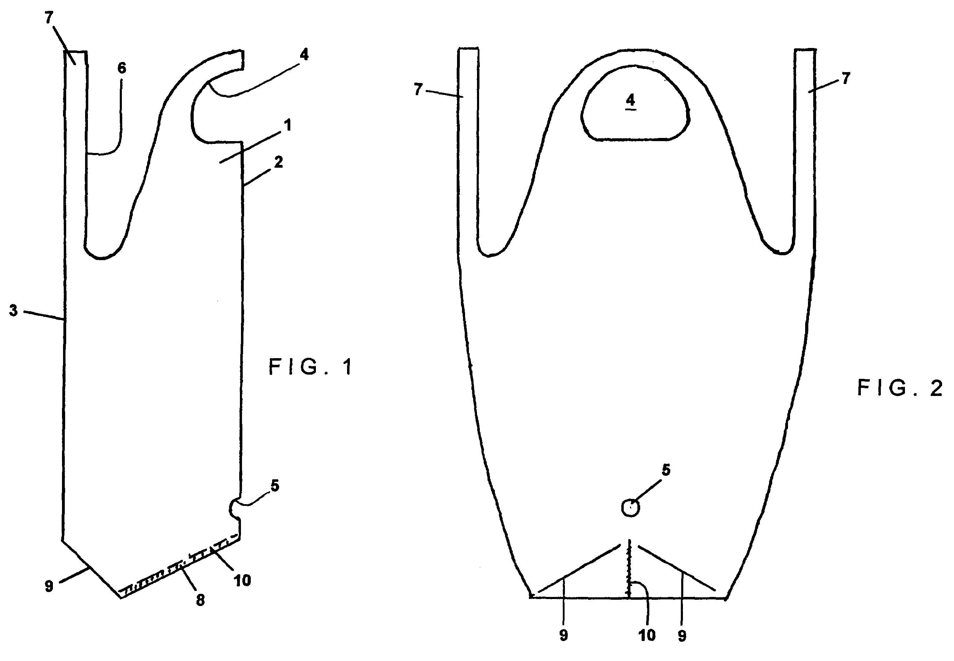

In Fig. 1 ist eine erste Ausführungsform der Schürze 1 dargestellt, die aus einem Abschnitt einer Folienmaterialbahn hergestellt ist, die längs einer Faltkante 2 auf sich selbst mittig umgefaltet wird, so daß die Randkanten des Folienbandes an der Seite 3 lose aufeinanderliegen. Von der Seite der Faltkante 2 aus wird eine erste Ausstanzung 4 durch beide übereinanderliegenden Folienbahnen vorgenommen, wobei ggf. eine noch zu erläuternde weitere Ausstanzung 5 ebenfalls an dieser Faltkante 2 angebracht wird. Von der Oberseite des auf sich selbst umgefalteten Folienabschnittes wird eine Ausstanzung 6 eingebracht, die später die in Fig. 2 gezeigten Befestigungsbänder 7 bildet. An der Unterseite des in Fig. 1 gezeigten Folienabschnittes werden zwei Abschrägungen 8, 9 abgestanzt, wobei die von der Faltkante 2 ausgehende abgeschrägte Kante durch eine Schweißnaht 10 verschlossen wird.

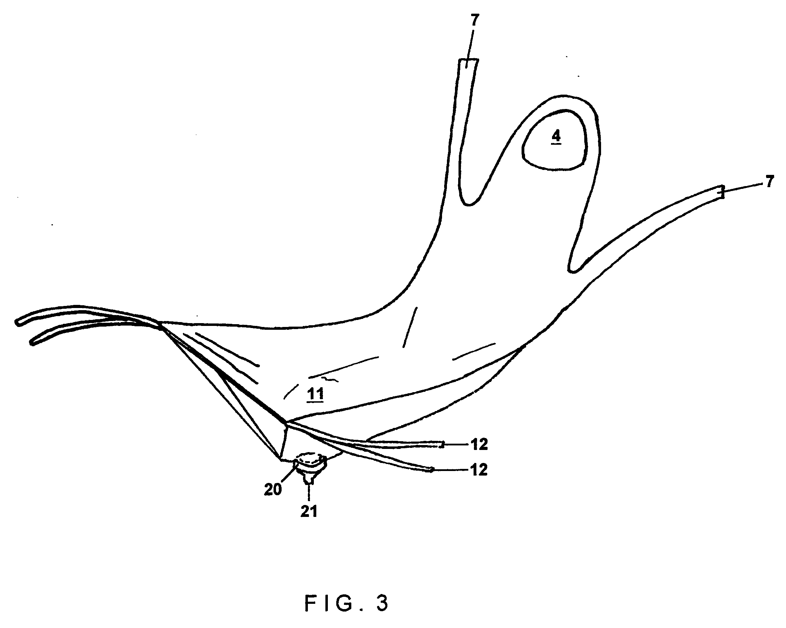

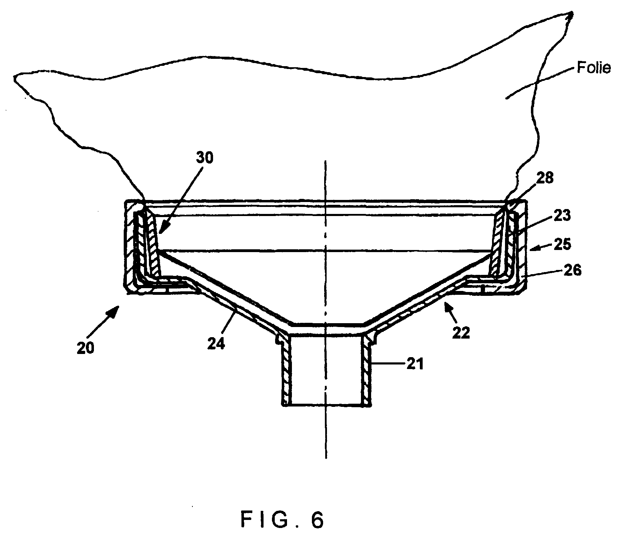

Wenn der so hergestellte, auf sich selbst umgefaltete Folienstreifen auseinandergefaltet wird, so ergibt sich die in Fig. 2 gezeigte Form, aus der für das Durchstecken des Kopfes einer die Schürze tragenden Person bestimmte Öffnung 4 sowie die Befestigungsbänder 7 zu erkennen sind, die um den Körper der Person gebunden werden. Die Schweißnaht 10 zieht sich beim Auffalten des Folienstreifens nach oben, so daß die in Fig. 3 dargestellte Ablauftasche 11 am unteren Bereich der Schürze gebildet wird. Wie bereits erwähnt wurde, bildet die Ausstanzung 5 nach den Fig. 1 und 2 eine Ablauföffnung, die durch einen Siebkörper 20 mit einem Ablaufstutzen 21 verschlossen werden kann, wie dies anhand der Fig. 6 noch näher erläutert wird. An den Abschrägungen 9 werden vorzugsweise Befestigungsbänder 12 angeschweißt, wie dies ebenfalls aus Fig. 3 zu erkennen ist. Diese Befestigungsbänder 12 können beispielsweise zur Befestigung des unteren Endes der Schürze und damit der Ablauftasche an einem Behandlungstisch oder dergleichen dienen.

Es ist aus den Fig. 1 - 3 zu erkennen, daß auf diese Weise eine aus Folienmaterial hergestellte Schürze in einfacher Weise mit einer integrierten Ablauftasche versehen werden kann, ohne daß ein wesentlicher zusätzlicher Materialaufwand und wesentliche zusätzliche Arbeitsschritte erforderlich sind. Zur Bildung der Ablauftasche ist lediglich die Herstellung einer Schweißnaht 10 an einer ggf. schräg verlaufenden Unterkante des auf sich selbst umgefalteten Folienmaterials erforderlich, wobei die Abschrägung 9 lediglich dazu dient, die Oberkante der Ablauftasche in günstiger Weise zu gestalten, so daß hier Befestigungsbänder 9 in einfacher Weise durch Verschweißen angebracht werden können, die zusätzlich eine Verstärkung des Endes der Schweißnaht 10 ergeben, das von der Faltkante 2 nach Fig. 1 abgewandt ist.

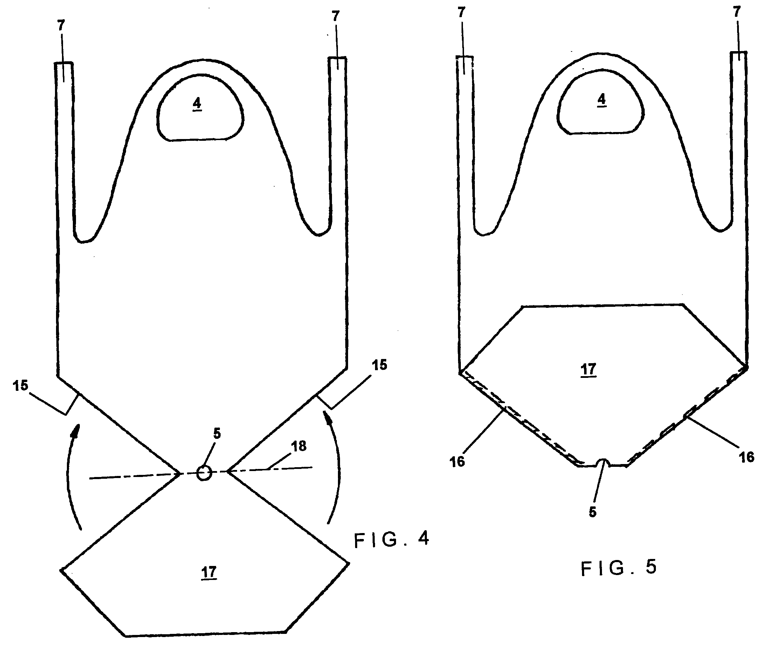

In den Fig. 4 und 5 ist eine weitere Ausführungsform der Schürze dargestellt, bei der der Folienstreifen in ähnlicher Weise wie in Fig. 1 gestanzt wird, um die Öffnung 4 und die Befestigungsbänder 7 und ggf. die Auslaßöffnung 5 zu bilden. Zusätzlich wird eine dreieckförmige Ausstanzung 15 beispielsweise in nach auf sich selbst umgefalteten Zustand der Folienbahn von den freien Seitenkanten der Folienbahn aus eingebracht, so daß ein unterer Abschnitt 17 des Folienmaterials gebildet ist, wie dies aus Fig. 4 gebildet ist. Dieser freie Abschnitt 17 wird dann nach oben hin umgefaltet und mit dem dann darunterliegenden Folienmaterial über zwei Schweißnähte 16 gemäß Fig. 5 mit dem darunterliegenden Material verbunden. Auch hier kann durch einfache zusätzliche Ausstanzungen 15 und zwei Schweißnähte 16 am unteren Ende der Schürze eine Ablauftasche ausgebildet werden, die ebenfalls wieder eine Ablauföffnung 5 aufweist.

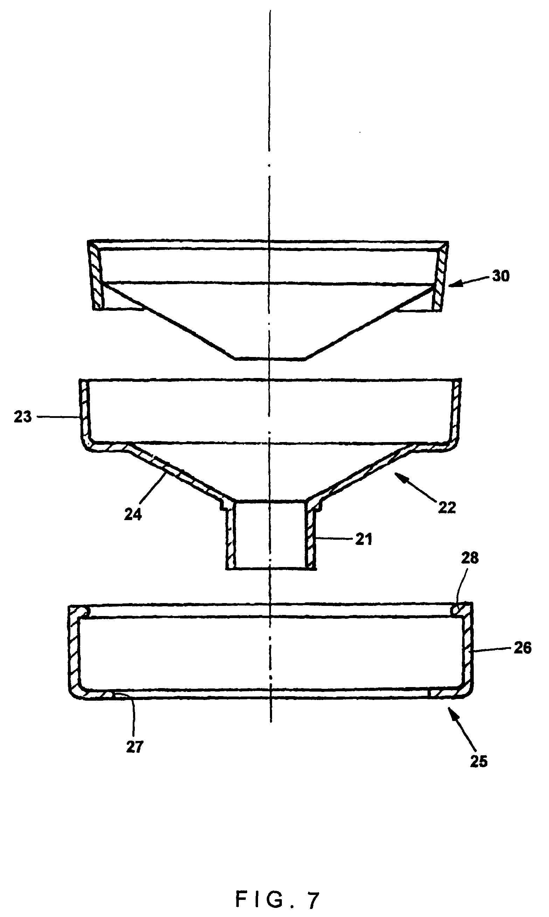

In diese Ablauföffnung 5 nach den Fig. 1 - 5 kann ein in den Figuren 6 und 7 ausführlicher gezeigter Siebeinsatz 20 mit einem Ablaufstutzen 21 eingesetzt werden. Dieser Ablaufstutzen 21 bildet einen Teil eines Innenringes 22 mit einer im wesentlichen zylindrischen Umfangswand 23 und einer konischen Bodenwand 24, in der der Ablaufstutzen 21 mündet. Dieser Innenring 22 wird von der Innenseite der Ablauftasche 11 aus in die Ablauföffnung 5 eingesetzt, worauf ein Klemmring 25 mit einer zylindrischer Umfangswand 26 und einer Öffnung 27 in der Bodenwand über den Innenring 22 unter Druck aufgepreßt und geklemmt wird, so daß der die Ablauföffnung 5 umgebende Folienabschnitt unter Abdichtung zwischen den Ringen 22, 25 eingeklemmt wird. Der Klemmring weist an seiner Oberkante einen Rastwulst 28 auf, unter den die Oberkante der zylindrischen Umfangswand 23 des Innenkörpers 22 einrastet. In den Innenring kann dann ein Siebeinsatz 30 beliebiger Art eingesetzt werden, der in der Spritzflüssigkeit enthaltende Feststoffe auffängt, so daß diese ggf. einer weiteren Untersuchung zugeführt werden können.

Der Schlauchstutzen 21 kann über einen Schlauchabschnitt mit einer Entsorgungseinrichtung, beispielsweise einem Abfluß verbunden werden.

## Patentansprüche

1. Zum einmaligen Gebrauch bestimmte Schürze, insbesondere für medizinische Zwecke, die aus einer Kunststofffolienbahn hergestellt ist,
dadurch gekennzeichnet, daß am unteren Bereich der Schürze (1) einstückig eine Ablauftasche (11) ausgebildet ist, die das Auffangen von von der Schürze (1) abtropfenden Flüssigkeiten ermöglicht.

2. Schürze nach Anspruch 1,
dadurch gekennzeichnet, daß die Ablauftasche dadurch gebildet ist, daß bei der Herstellung der Schürze (1) aus der Folienbahn diese mittig auf sich selbst umgefaltet wird, wobei von der Faltkante (2) aus eine erste Aussparung (4) zur Bildung einer Kopföffnung und eine zweite Aussparung zur Bildung einer Ablauföffnung (5) ausgestanzt ist, und daß die beiden Lagen der auf sich selbst umgefalteten Folienbahn an der Untekante des Folienmaterialabschnittes miteinander durch eine Schweißnaht (10) verschweißt werden, wobei diese Schweißnaht nach dem Auffalten des Folienmaterials eine Vorderkante der Ablauftasche (11) bildet.

3. Schürze nach Anspruch 1 oder 2,
dadurch gekennzeichnet, daß die Unterkante des auf sich selbst umgefalteten Folienmaterialabschnittes eine Dreieckform mit zwei abgeschrägte Kanten (8, 9) aufweist, und daß die Schweißnaht die ersten, von der Faltkante (2) ausgehenden, abgeschrägten Kanten (8) die beiden Lagen des auf sich selbst umgefalteten Folienabschnittes verbindet, während an den anderen abgeschrägten Kanten (9) nach dem Auffalten des Folienmaterialabschnittes Befestigungsbänder (12) durch Schweißen befestigt werden.

4. Schürze nach Anspruch 1,
dadurch gekennzeichnet, daß die Ablauftasche (11) dadurch gebildet ist, daß sich am unteren Ende der Schürze (1) von den jeweiligen Seitenkanten des Folienmaterialabschnittes zwei dreieckförmige Aussparungen (15) erstrecken, deren Spitzen auf den Mittelbereich des Folienbahnabschnittes gerichtet sind, daß zwischen diesen Spitzen eine Ablauföffnung (5) liegt, und daß der unterhalb der Spitzen der dreieckförmigen Aussparungen (15) liegende Folienmaterialteil (17) entlang einer durch die Spitzen der Aussparungen (15) verlaufenden Faltkante (18) nach oben auf das Folienmaterial umgefaltet wird, worauf die Scheitelkanten der dreieckförmigen Aussparungen durch Schweißnähte (16) miteinander verschweißt werden.

5. Schürze nach einem der vorhergehenden Ansprüche,
dadurch gekennzeichnet, daß in die Ablauföffnung (5) der Ablauftasche ein Siebkörper (20) eingesetzt ist, der einen Schlauchstutzen (21) zur Entsorgung der aufgefangenen Flüssigkeiten aufweist.

6. Schürze nach Anspruch 5,
dadurch gekennzeichnet, daß der Siebkörper durch einen Innenring (22) mit einer im wesentlichen zylindrischen Umfangswand (23) und einen Außenring (25) gebildet ist, der auf den Innenring (22) aufklemmbar ist, wobei das die Ablauföffnung (5) umgeben de Folienmaterial zwischen dem Innenring (22) und dem Außenring (25) beim Ineinanderschieben der Ringe (22, 25) unter Abdichtung eingeklemmt wird.

7. Schürze nach Anspruch 6,
dadurch gekennzeichnet, daß im Inneren des Innenringes (22) ein Siebeinsatz (30) angeordnet ist.
